# EUROPEAN PATENT SPECIFICATION

(11) **EP 3 933 369 B1**
(45) Date of publication and mention of the grant of the patent: **22.11.2023**
(21) Application number: 20183850.5
(22) Date of filing: 03.07.2020
(51) Int. Cl.: G01M 5/00

(54) **CABLE**
KABEL
CÂBLE

(43) Date of publication of application: 05.01.2022
(73) Proprietor: Lapp Engineering AG, 6330 Cham (CH)
(72) Inventor: Reinelt, Attila, 6330 Cham (CH); Rampi, Loic, 6330 Cham (CH)
(74) Representative: Rutz & Partner

(56) References cited:
- WO-A1-2017/050443
- DE-A1-102018 217 743
- US-B2- 7 663 381

## Description

The present invention relates to a cable whose status can be monitored with a monitoring system.

A variety of cables for different types of applications is known from the state of the art.

Cables are subjected to various external influences during their service life. Mechanical, thermal and chemical influences can reduce the initially expected lifetime of a cable and lead to premature failure or severe reduction in transmission quality.

Cables are often used in large machines and installations where uninterrupted service is required by all components since failure of a single piece of equipment leads to downtimes of the whole system. In particular for specialized applications, where non-standard cables are employed, a cable cannot be quickly replaced after failure because specialized cables are generally only produced upon request and not kept in stock. This leads to long downtimes and hence production interruption. This is particularly problematic for installations designed for uninterrupted use such as e.g. automated production plants, drilling rigs or installations relevant for public safety.

US7663381B2 discloses an electrical condition monitoring method for a polymeric product such as an insulated cable. The method utilizes measurement of electrical resistivity of a conductive degradation sensor to monitor degradation. The degradation sensor comprises a polymeric matrix and conductive fillers.

The problem of the present invention is to provide an improved cable that allows for a monitoring of the status of the conductors within the cable.

In particular, the cable shall allow for a prediction of the remaining service life to reduce the risk of sudden failure of the cable.

Moreover, the cable shall allow for a predictive maintenance if the cable is damaged due to repeated use or external influences.

The inventive solution shall be applicable for any cable structure that has been defined according to given requirements and specifications.

Manufacturing processes and layer material used for conventional cables shall be applicable for manufacturing the cable.

Further, the inventive solution shall be applicable to cables used in various conditions inside or outdoors, in particular to cables used on drilling rigs.

The problem is solved by a cable according to claim 1, a method for monitoring the status of a cable according to claim 10 and a cable status monitoring system according to claim 13. Further preferred embodiments of the cable are defined in dependent claims.

The cable comprises
- at least one conductor;
- at least one conductor insulation layer formed around and enclosing the at least one conductor;
- an inner sheath formed around and enclosing the at least one conductor insulation layer;
- an outer sheath formed around and enclosing the inner sheath and the at least one conductor insulation layer.

According to the invention, the cable further comprises a first probe conductor and a second probe conductor, which are electronically connected together in series connection, and a reference conductor. The first probe conductor, the second probe conductor and the reference conductor are enclosed in the inner sheath.

The first probe conductor and the second probe conductor experience the same external influences, such as mechanical, chemical and thermal stress, as the at least one conductor. These external influences hence lead to an aging of the at least one conductor and the first and second probe conductors. The aging leads to an increase of the electric resistance of the first probe conductor and the second probe conductor. By connecting the two connectors in series, preferably on one end of the cable, their total electric resistance is easily measurable. The electric resistance of the first probe conductor and the second probe conductor in series hence provides a direct information about the status of the cable and in particular the conductors of the cable. The dependence of the electric resistance with aging effects can easily be studied in a laboratory to provide reference values for increases in resistance.

Cables are often used in environments with varying temperatures or the temperature of a cable can increase under load due to ohmic heating. The electric resistance of an electric conductor increases with temperature. The reference conductor allows for a temperature measurement of the cable. Using this temperature, the electric resistance at a reference temperature of the first probe conductor and the second probe conductor can be calculated using the linear relationship between electric resistivity and temperature and the known temperature coefficient of resistivity.

Hence, according to the invention it is ensured that varying temperatures of the cable do not lead to misinterpretation of the electric resistance of the first and second probe conductor and that the real status of the cable is probed.

In a preferred embodiment, the reference conductor is a one-wire bus. Preferably, the first probe conductor and/or the second probe conductor (6B) is a profibus wire.

Hence, the one-wire bus allows for reading out sensors that provide temperature and/or humidity measurements. The first and second probe conductors are compact and made from standard wires, reducing cost.

In a particularly preferred embodiment of the present invention, the reference conductor is connected to at least one sensor, preferably a temperature sensor and/or a humidity sensor. Hence the reference conductor can transmit the temperature and/or humidity reading to a measuring unit. The reference conductor is preferably arranged centrally within the cable. This way, the reference signal determined through the reference conductor is less subject to possible temperature gradients across the cable.

In preferred embodiments, the inner sheath consists of a plastic material, preferably a thermoplastic elastomeric material that protects the inner layers and conductors against mechanical and chemical impact. Preferably, the outer sheath consists of a plastic material, preferably a thermoplastic elastomeric material that protects the inner layers and conductors against mechanical and chemical impact.

In further preferred embodiments, the cable further comprises a screening layer enclosing the inner sheath. The screening layer reduces the influence of external electromagnetic fields on the transmission of the cable. The cable may further comprise an interstitial layer enclosing the inner sheath or the screening layer. The interstitial layer acts as a spacer for a reinforcing layer wrapped around it. The reinforcing layer improves the mechanical resistance of the cable.

The cable preferably further comprises at least one filler which extends along the cable axis to optimize the roundness of the cable.

In a further embodiment according to the invention, the cable further comprises a control wire to transmit steering or surveillance signals.

Preferably, the cable comprises three or six conductors which are each surrounded by a conductor insulation layer and arranged evenly around the cable axis. Through the even arrangement, the shape of the cross-section of the cable is optimized.

The conductors are preferably made of stranded or bunched copper conductors.

In preferred embodiments, the first probe conductor and/or the second probe conductor are arranged near the outer sheath of the cable. The first and second probe conductor will then be subjected to external influences more directly than other parts of the cable, improving their responsitivity to degradation.

The status of an inventive cable can be monitored by an equally inventive method.

The method comprises the steps of:
(a) measuring the total electric resistance of a first probe conductor and a second probe conductor (6B), which are electronically connected together in series connection; and
(b) measuring the temperature of the cable using a reference conductor integrated into the cable; and
(c) normalizing the total electric resistance of the first probe conductor and the second probe conductor to a reference temperature using the measured temperature;
(d) computing the difference between the normalized electric resistance and a reference value; and
(e) computing the remaining cable lifetime using the difference between the normalized electric resistance and the reference value.

The method hence allows for a constant monitoring of a cable even under load, without disturbing the transmission of electric current or signals. The cable can therefore be used with a guaranteed functionality, since aging of the cable is constantly monitored such that unexpected failure is strongly reduced.

In a preferred embodiment, the method is performed automatically, preferably by a computer-assisted device. This allows for a constant monitoring of the status of a cable at minimum cost and personal effort.

In a particularly preferred embodiment, a replacement cable is automatically ordered if the remaining cable lifetime is lower than a predefined value. A replacement cable will be on site well before failure of the cable. The replacement can then be executed at a planned moment.

The inventive method is preferably performed using an equally inventive cable monitoring unit. The cable monitoring unit for monitoring the status of an inventive cable preferably comprises a cylindrical body with a cable passage opening through which the cable or the first probe conductor, the second probe conductor or the reference conductor can be passed through. The monitoring unit is inductively or in an electrically conductive manner connected to the first probe conductor, the second probe conductor and the reference conductor. The monitoring unit can send and receive measuring signals from the first probe conductor, the second probe conductor and the reference conductor.

In a preferred embodiment, the cable monitoring unit further comprises a measuring unit, which is preferably located in a recess within the cylindrical body, which comprises a microchip and/or a wireless communication unit.

The present invention will be further described by way of example, with reference to the accompanying drawings, wherein:
- Fig. 1: shows a cross-sectional view of a first embodiment of an inventive cable 10;
- Fig. 2: shows a cross-sectional view of a second embodiment of an inventive cable 10; and
- Fig. 3: schematically depicts an inventive cable monitoring unit 100.

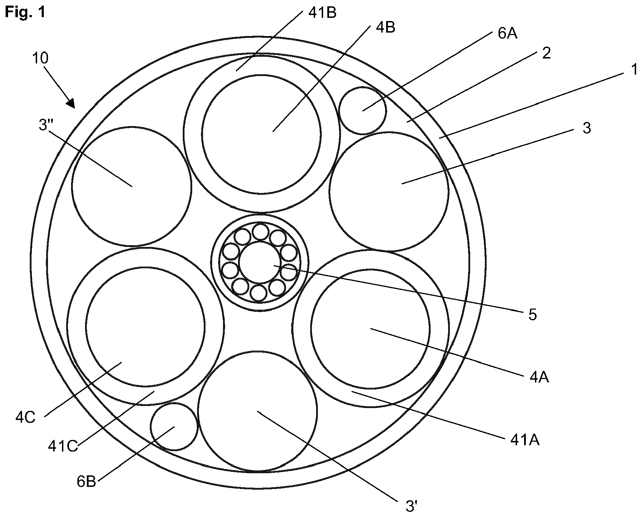

Fig. 1 shows a cross-sectional view of a first embodiment of an inventive cable 10. The cable comprises three conductors 4A, 4B, 4C, each of which is electrically insulated by a surrounding conductor insulation layer 41A, 41B, 41C. A reference conductor 5 is arranged at the center of the cable 10. Three fillers 3, 3', 3" are arranged between the insulated conductors 4A, 4B, 4C. A first probe conductor 6A and a second probe conductor 6B are arranged near the outside of the cable 10. An inner sheath 2 is formed around the aforementioned components of the cable 10. All constituents of the cable 10 are enclosed by an outer sheath 1.

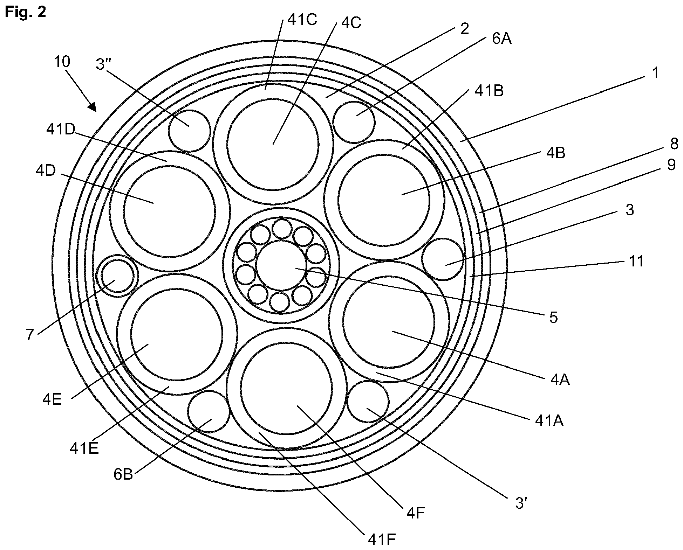

Fig. 2 schematically depicts a cross-sectional view of a second embodiment of an inventive cable 10. The cable comprises six conductors 4A, 4B, 4C,... each of which is electrically insulated by a surrounding conductor insulation layer 41A, 41B, 41C.... A reference conductor 5 is arranged at the center of the cable 10. The cable further comprises three fillers 3, 3', 3" to optimize the shape of the cable 10. A first probe conductor 6A and a second probe conductor 6B are arranged near the outside of the cable 10. The cable 10 further comprises a control wire 7. An inner sheath 2 is formed around the aforementioned components of the cable 10. A screening layer 11 is formed around the inner sheath 2. An interstitial layer 9 is present between screening layer 11 and a reinforcing layer 8. All constituents of the cable 10 are enclosed by an outer sheath 1 which is formed on the reinforcing layer.

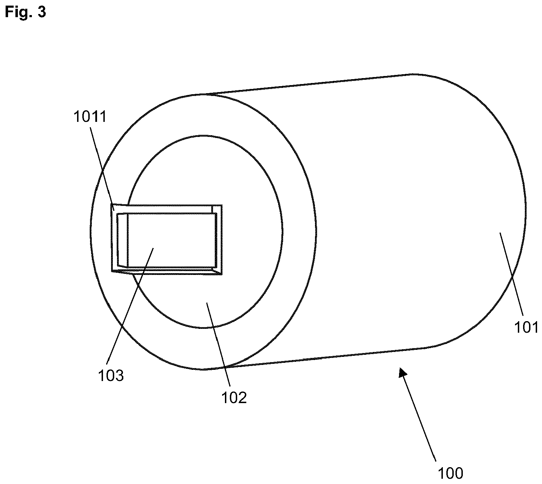

Fig. 3 schematically depicts an inventive cable monitoring unit 100. The monitoring unit 100 comprises a cylindrical body 101 with a cable passage opening 102, through which a cable can be guided. A measuring unit 103 is arranged in a recess 1011 formed in the cylindrical body 101.

### List of reference signs

- 1: outer sheath
- 2: inner sheath
- 3, 3', 3": filler
- 4A, 4B, 4C,...: conductor
- 41A, 41B, 41C,...: conductor insulation layer
- 5: reference conductor
- 6A: first probe conductor
- 6B: second probe conductor
- 7: control wire
- 8: reinforcing layer
- 9: interstitial layer
- 10: cable
- 11: screening layer
- 100: monitoring unit
- 101: cylindrical body
- 1011: recess
- 102: cable passage opening
- 103: measuring unit

## Claims

1. A cable (10) comprising:
- one or more conductors (4A, 4B, 4C, ...);
- at least one conductor insulation layer (41A, 41B, 41C,...) formed around and enclosing said at least one conductor (4A, 4B, 4C,...);
- an inner sheath (2) formed around and enclosing said at least one conductor insulation layer (41A, 41B, 41C,...) ;
- an outer sheath (1) formed around and enclosing said inner sheath (2) and said at least one conductor insulation layer (41A, 41B, 41C,...);
wherein the cable (10) further comprises a first probe conductor (6A) and a second probe conductor (6B), which are electronically connected together in series connection, the probe conductors having an electrical resistance that increases with aging,
**characterized in that** the cable (10) further comprises a reference conductor (5), said first probe conductor (6A), said second probe conductor (6B) and reference conductor (5) being enclosed in said inner sheath (2), wherein the reference conductor (5) allows for temperature measurement of the cable (10) allowing monitoring of the cable (10) under load, such that the total electrical resistance of the first probe conductor (6A) and the second probe conductor (6B) can be normalized to a reference temperature.

2. A cable (10) according to claim 1, wherein the reference conductor (5) is a one-wire bus and/or the first probe conductor (6A) and/or the second probe conductor (6B) is a profibus wire.

3. A cable (10) according to claim 1 or 2, wherein the reference conductor (5) is connected to at least one sensor, preferably a temperature sensor and/or a humidity sensor and/or that the reference conductor (5) is arranged centrally within the cable (10).

4. A cable (10) according to claim 1, 2 or 3, wherein the inner sheath (2) consists of a plastic material, preferably a thermoplastic elastomeric material that protects the inner layers and conductors against mechanical and chemical impact and/or the outer sheath (1) consists of a plastic material, preferably a thermoplastic elastomeric material that protects the inner layers and conductors against mechanical and chemical impact.

5. A cable (10) according to one of the claims 1 - 4, wherein the cable (10) further comprises a screening layer (11) enclosing said inner sheath (2) and/or an interstitial layer (9) enclosing said inner sheath (2) or screening layer (11) and/or a reinforcing layer (8) enclosing said inner sheath (2) or said interstitial layer (9).

6. A cable (10) according to one of the claims 1 - 5, wherein the cable (10) further comprises at least one filler (3, 3', 3") which extends along the cable axis to optimize the roundness of the cable (10).

7. A cable (10) according to one of the claims 1 - 6, wherein the cable (10) further comprises a control wire (7) to transmit steering or surveillance signals.

8. A cable (10) according to one of the claims 1 - 7, wherein the cable comprises three or six conductors (4A, 4B, 4C,...) which are each surrounded by a conductor insulation layer (41A, 41B, 41C,...) and arranged evenly around the cable axis.

9. A cable (10) according to one of the claims 1 - 8, wherein the conductors (4A, 4B, 4C,...) are made of stranded or bunched copper conductors and/or that the first probe conductor (6A) and/or the second probe conductor (6B) are arranged near the outer sheath (1) of the cable (10).

10. A method for monitoring the status of a cable (10) according to one of the claims 1 - 9, wherein
(a) the total electric resistance of a first probe conductor (6A) and a second probe conductor (6B), which are electronically connected together in series connection, is measured;
(b) the temperature of the cable (10) is measured using a one-wire bus (5) integrated into the cable (10);
(c) the electric resistance of the first probe conductor (6A) and the second probe conductor (6B) is normalized to a reference temperature using the measured temperature;
(d) the difference between the normalized electric resistance and a reference value is computed;
(e) the remaining cable lifetime is computed using the difference between the normalized electric resistance and the reference value.

11. A method according to claim 10 wherein the method is performed automatically, preferably by a computer-assisted device.

12. A method according to claim 10 or 11 wherein a replacement cable is automatically ordered if the remaining cable lifetime is lower than a predefined value.

13. A cable monitoring unit (100) for monitoring the status of a cable (10) according to one of the claims 1 to 9 by performing the method according to one of the claims 10-12.

14. A cable monitoring unit (100) according to claim 13 comprising a cylindrical body (101) with a cable passage opening (102) through which the cable (10) or the first probe conductor (6A), the second probe conductor (6B) or the reference conductor (5) can be passed through.

15. A cable monitoring unit (100) to claim 13 or 14 further comprising a measuring unit (103), which is preferably located in a recess (1011) within the cylindrical body (101), which comprises a microchip and/or a wireless communication unit.

## Patentansprüche

1. Kabel (10) mit:
- einem oder mehreren Leitern (4A, 4B, 4C, ...);
- wenigstens einer Leiterisolierschicht (41A, 41B, 41C, ...), die um den wenigstens einen Leiter (4A, 4B, 4C, ...) herum ausgebildet ist und diesen umschliesst;
- einer inneren Umhüllung (2), die um die wenigstens eine Leiterisolierschicht (41A, 41B, 41C, ...) herum ausgebildet ist und diese umschliesst;
- einer äusseren Umhüllung (1), die um die genannte innere Umhüllung (2) und die genannte wenigstens eine Leiterisolierschicht (41A, 41B, 41C, ...) herum ausgebildet ist und diese umschliesst;
wobei das Kabel (10) einen ersten Sondenleiter (6A) und einen zweiten Sondenleiter (6B) umfasst, die elektronisch in Reihe miteinander verbunden sind, welche Sondenleiter einen elektrischen Widerstand aufweisen, der mit der Alterung zunimmt, **dadurch gekennzeichnet,**
**dass** das Kabel (10) ferner einen Referenzleiter (5) umfasst, wobei der genannte erste Sondenleiter (6A), der genannte zweite Sondenleiter (6B) und der Referenzleiter (5) in der inneren Umhüllung (2) eingeschlossen sind, wobei der Referenzleiter (5) eine Temperaturmessung des Kabels (10) und eine Überwachung des Kabels (10) unter Last erlaubt, so dass der totale elektrische Widerstand des ersten Sondenleiters (6A) und des zweiten Sondenleiters (6B) auf eine Referenztemperatur normalisiert werden kann.

2. Kabel (10) nach Anspruch 1, wobei der Referenzleiter (5) ein Ein-Draht-Bus ist und/oder der erste Sondenleiter (6A) und/oder der zweite Sondenleiter (6B) eine Profibus-Leitung ist.

3. Kabel (10) nach Anspruch 1 oder 2, wobei der Referenzleiter (5) mit mindestens einem Sensor, vorzugsweise einem Temperatursensor und/oder einem Feuchtigkeitssensor, verbunden ist und/oder dass der Referenzleiter (5) zentral innerhalb des Kabels (10) angeordnet ist.

4. Kabel (10) nach Anspruch 1, 2 oder 3, wobei die innere Umhüllung (2) aus einem Kunststoffmaterial, vorzugsweise einem thermoplastischen Elastomermaterial, besteht, das die inneren Schichten und Leiter vor mechanischen und chemischen Einwirkungen schützt und/oder die äussere Umhüllung (1) aus einem Kunststoffmaterial, vorzugsweise einem thermoplastischen Elastomermaterial, besteht, das die inneren Schichten und Leiter vor mechanischen und chemischen Einwirkungen schützt.

5. Kabel (10) nach einem der Ansprüche 1 - 4, wobei das Kabel (10) ferner eine Abschirmschicht (11), die die innere Umhüllung (2) umschliesst, und/oder eine Zwischenschicht (9), die die innere Umhüllung (2) oder die Abschirmschicht (11) umschliesst, und/oder eine Verstärkungsschicht (8), die die innere Umhüllung (2) oder die Zwischenschicht (9) umschliesst, aufweist.

6. Kabel (10) nach einem der Ansprüche 1 - 5, wobei das Kabel (10) weiterhin mindestens einen Füllstoff (3, 3', 3'') aufweist, der sich entlang der Kabelachse erstreckt, um die Rundheit des Kabels (10) zu optimieren.

7. Kabel (10) nach einem der Ansprüche 1 - 6, wobei das Kabel (10) weiterhin eine Steuerleitung (7) zur Übertragung von Steuer- oder Überwachungssignalen aufweist.

8. Kabel (10) nach einem der Ansprüche 1 - 7, wobei das Kabel drei oder sechs Leiter (4A, 4B, 4C, ...) aufweist, die jeweils von einer Leiterisolierschicht (41A, 41B, 41C, ...) umgeben und gleichmäßig um die Kabelachse angeordnet sind.

9. Kabel (10) nach einem der Ansprüche 1 - 8, wobei die Leiter (4A, 4B, 4C, ...) aus verseilten oder gebündelten Kupferleitern bestehen und/oder dass der erste Sondenleiter (6A) und/oder der zweite Sondenleiter (6B) nahe der äusseren Umhüllung (1) des Kabels (10) angeordnet sind.

10. Verfahren zur Überwachung des Zustandes eines Kabels (10) nach einem der Ansprüche 1 - 9, wobei
(a) der elektrische Gesamtwiderstand eines ersten Sondenleiters (6A) und eines zweiten Sondenleiters (6B), die elektronisch in Reihenschaltung miteinander verbunden sind, gemessen wird;
(b) die Temperatur des Kabels (10) über einen in das Kabel (10) integrierten Ein-Draht-Bus (5) gemessen wird;
(c) der elektrische Widerstand des ersten Sondenleiters (6A) und des zweiten Sondenleiters (6B) anhand der gemessenen Temperatur auf eine Referenztemperatur normiert wird;
(d) die Differenz zwischen dem normierten elektrischen Widerstand und einem Referenzwert berechnet wird;
(e) die verbleibende Lebensdauer des Kabels anhand der Differenz zwischen dem normierten elektrischen Widerstand und dem Referenzwert berechnet wird.

11. Verfahren nach Anspruch 10, wobei das Verfahren automatisch, vorzugsweise durch ein computergestütztes Gerät, durchgeführt wird.

12. Verfahren nach Anspruch 10 oder 11, wobei automatisch ein Ersatzkabel bestellt wird, wenn die verbleibende Kabellebensdauer unter einem vordefinierten Wert liegt.

13. Kabelüberwachungseinheit (100) zur Überwachung des Zustandes eines Kabels (10) nach einem der Ansprüche 1 bis 9 unter Durchführung des Verfahrens nach einem der Ansprüche 10-12.

14. Kabelüberwachungseinheit (100) nach Anspruch 13, bestehend aus einem zylindrischen Körper (101) mit einer Kabeldurchführungsöffnung (102), durch die das Kabel (10) oder der erste Sondenleiter (6A), der zweite Sondenleiter (6B) oder der Referenzleiter (5) hindurchgeführt werden können.

15. Kabelüberwachungseinheit (100) nach Anspruch 13 oder 14 weiter umfassend eine Messeinheit (103), die vorzugsweise in einer Ausnehmung (1011) innerhalb des zylindrischen Körpers (101) angeordnet ist, die einen Mikrochip und/oder eine drahtlose Kommunikationseinheit umfasst.

## Revendications

1. Câble (10) comprenant:
- un ou plusieurs conducteurs (4A, 4B, 4C, ...);
- au moins une couche d'isolation de conducteur (41A, 41B, 41C, ...) formée autour et entourant ledit au moins un conducteur (4A, 4B, 4C, ...) ;
- une couche intérieure (2) formée autour et entourant ladite au moins une couche d'isolation de conducteur (41A, 41B, 41C, ...) ;
- une couche extérieure (1) formée autour et entourant ladite couche intérieure (2) et ladite au moins une couche d'isolation de conducteur (41A, 41B, 41C, ...) ;
dans lequel le câble (10) comprend en outre une première sonde conductrice (6A) et une seconde sonde conductrice (6B), qui sont connectées électroniquement en série, et dont les sondes conductrices ont une résistance électrique qui augmente avec le vieillissement,
**caractérisé en ce que** le câble (10) comprend en outre un conducteur de référence (5), ladite première sonde conductrice (6A), ladite deuxième sonde conductrice (6B) et le conducteur de référence (5) étant enfermés dans ladite couche intérieure (2), dans laquelle la référence conducteur (5) permet de mesurer la température du câble (10), permettant ainsi de surveiller le câble (10) sous charge, de sorte que la résistance électrique totale de la première sonde conducteur (6A) et de la seconde sonde conducteur (6B) puisse être normalisée par rapport à une température de référence.

2. Câble (10) selon la revendication 1, dans lequel la référence conducteur (5) est un bus monofilaire et/ou la première sonde conducteur (6A) et/ou la seconde sonde conducteur (6B) est un fil profibus.

3. Câble (10) selon la revendication 1 ou 2, dans lequel le conducteur de référence (5) est connecté à au moins un capteur, de préférence un capteur de température et/ou un capteur d'humidité et/ou dans lequel le conducteur de référence (5) est disposé au centre du câble (10).

4. Câble (10) selon la revendication 1, 2 ou 3, dans lequel la couche intérieure (2) est constituée d'un matériau plastique, de préférence un matériau élastomère thermoplastique qui protège les couches internes et les conducteurs contre les impacts mécaniques et chimiques et/ou la couche extérieure (1) est constituée d'un matériau plastique, de préférence un matériau élastomère thermoplastique qui protège les couches internes et les conducteurs contre les impacts mécaniques et chimiques.

5. Câble (10) selon une des revendications 1 - 4, dans lequel le câble (10) comprend en outre une couche de blindage (11) entourant ladite couche intérieure (2) et/ou une couche interstitielle (9) entourant ladite couche intérieure (2) ou couche de blindage (11) et/ou une couche de renforcement (8) entourant ladite couche intérieure (2) ou ladite couche interstitielle (9).

6. Câble (10) selon une des revendications 1 - 5, dans lequel le câble (10) comprend en outre au moins une matière de remplissage (3, 3', 3'') qui s'étend le long de l'axe du câble pour optimiser la rondeur du câble (10).

7. Câble (10) selon une des revendications 1 - 6, dans lequel pour transmettre des signaux de contrôle ou de surveillance.

8. Câble (10) selon une des revendications 1 - 7, dans lequel le câble comprend trois ou six conducteurs (4A, 4B, 4C, ...) qui sont chacun entourés d'une couche d'isolation de conducteur (41A, 41B, 41C, ...) et disposés régulièrement autour de l'axe du câble.

9. Câble (10) selon une des revendications 1 - 8, dans lequel les conducteurs (4A, 4B, 4C, ...) sont constitués de conducteurs en cuivre toronnés ou en faisceau et/ou que le premier conducteur de sonde (6A) et/ou le deuxième conducteur de sonde (6B) sont disposés à proximité de la couche extérieure (1) du câble (10).

10. Méthode de surveillance de l'état d'un câble (10) selon une des revendications 1 - 9, dans laquelle
(a) la résistance électrique totale d'une première sonde conductrice (6A) et d'une deuxième sonde conductrice (6B), qui sont connectées électroniquement en série, est mesurée;
(b) la température du câble (10) est mesurée à l'aide d'un bus monofilaire (5) intégré au câble (10);
(c) la résistance électrique de la première sonde conductrice (6A) et de la seconde sonde conductrice (6B) est normalisée à une température de référence à l'aide de la température mesurée;
(d) la différence entre la résistance électrique normalisée et une valeur de référence est calculée;
(e) la durée de vie restante du câble est calculée en utilisant la différence entre la résistance électrique normalisée et la valeur de référence.

11. Méthode selon la revendication 10, dans laquelle la méthode est exécutée automatiquement, de préférence par un dispositif assisté par ordinateur.

12. Méthode selon la revendication 10 ou 11 dans laquelle un câble de remplacement est automatiquement commandé si la durée de vie restante du câble est inférieure à une valeur prédéfinie.

13. Unité de surveillance du câble (100) pour surveiller l'état d'un câble (10) selon une des revendications 1 à 9 et exécuter la méthode selon une des revendications 10-12.

14. Unité de surveillance du câble (100) selon la revendication 13 comprenant un corps cylindrique (101) avec une ouverture de passage du câble (102) à travers laquelle le câble (10) ou la première sonde conductrice (6A), la deuxième sonde conductrice (6B) ou la référence conductrice (5) peuvent être traversés.

15. Unité de surveillance du câble (100) selon la revendication 13 ou 14 comprenant en outre une unité de mesure (103), qui est de préférence située dans une cavité (1011) à l'intérieur du corps cylindrique (101), qui comprend une micro-chip et/ou une unité de communication sans fil.
